# EUROPÄISCHE PATENTSCHRIFT

(11) **EP 3 563 279 B1**
(45) Veröffentlichungstag und Bekanntmachung des Hinweises auf die Patenterteilung: **06.01.2021**
(21) Anmeldenummer: 18702095.3
(22) Anmeldetag: 11.01.2018
(51) Int. Cl.: G06F 21/55, G06F 21/57, G06F 21/60, H04L 9/08, H04L 9/32, H04L 29/06

(54) **VERFAHREN UND COMPUTER ZUM KRYPTOGRAFISCHEN SCHÜTZEN VON STEUERUNGSKOMMUNIKATION IN UND/ODER SERVICE-ZUGANG ZU IT-SYSTEMEN, INSBESONDERE IM ZUSAMMENHANG MIT DER DIAGNOSE UND KONFIGURATION IN EINEM AUTOMATISIERUNGS-, STEUERUNGS- ODER KONTROLLSYSTEM**
METHOD AND COMPUTER FOR CRYPTOGRAPHICALLY PROTECTING CONTROL COMMUNICATION IN AND/OR SERVICE ACCESS TO IT SYSTEMS, IN PARTICULAR IN CONNECTION WITH THE DIAGNOSIS AND CONFIGURATION IN AN AUTOMATION, CONTROL OR SUPERVISORY SYSTEM
PROCÉDÉ ET ORDINATEUR DE PROTECTION CRYPTOGRAPHIQUE DE COMMUNICATION DE COMMANDE DANS ET/OU D'ACCÈS DE SERVICE À DES SYSTÈMES IT, EN PARTICULIER EN RAPPORT AVEC LE DIAGNOSTIC ET LA CONFIGURATION DANS UN SYSTÈME D'AUTOMATISATION, DE COMMANDE OU DE CONTRÔLE

(30) Priorität: 08.02.2017 DE 102017202002
(43) Veröffentlichungstag der Anmeldung: 06.11.2019
(73) Patentinhaber: Siemens Aktiengesellschaft, 80333 München (DE)
(72) Erfinder: FALK, Rainer, 85586 Poing (DE)
(86) Internationale Anmeldenummer: PCT/EP2018/050609
(87) Internationale Veröffentlichungsnummer: WO 2018/145847

(56) Entgegenhaltungen:
- EP-A1- 2 998 884
- WO-A1-00/48061
- US-A1- 2008 235 801
- US-B1- 7 584 508

## Beschreibung

Die Erfindung bezieht sich auf ein Verfahren zum kryptografischen Schützen von Steuerungskommunikation in und/oder Service-Zugang zu IT-Systemen, insbesondere im Zusammenhang mit der Diagnose und Konfiguration in einem Automatisierungs-, Steuerungs- oder Kontrollsystem gemäß dem Oberbegriff des Patentanspruches 1 und ein Computer zum kryptografischen Schützen von Steuerungskommunikation in und/oder Service-Zugang zu IT-Systemen, insbesondere im Zusammenhang mit der Diagnose und Konfiguration in einem Automatisierungs-, Steuerungs- oder Kontrollsystem gemäß dem Oberbegriff des Patentanspruches 7.

Ein integrierter kryptographischer Schutz für Komponenten von Informationstechnischen Systemen, so genannten IT-Systemen, insbesondere den von industriellen Datenverarbeitungs- und Steuerkomponenten in Automatisierungs-, Steuerungs- oder Kontrollsystemen und entsprechenden Systemlösungen, ist erforderlich, um Angriffe (z.B. Manipulation, Ausspähen etc.) gegen die Informationssicherheit solcher Systeme abzuwehren.

Ein IT-System ist ein elektronisch-datenverarbeitendes System, zu dem weil VNA-basierend (beruht auf der Basis einer Von-Neumann-Architektur) z.B. jegliche Art von Verteilten Systemen und Eingebetteten Systemen, aber auch auf einer Harvard-Architektur basierende elektronisch-datenverarbeitende Systeme, einzelne Computer, Großrechner, Hochleistungsrechner etc., teilweise auch Kommunikationssysteme sowie das Internet in seiner Gesamtheit zu zählen sind.

Eine wesentliche systemspezifische Funktionalität ist dabei der kryptographische Schutz von Steuerungskommunikation in IT-Systemen (z.B. "MACsec" gemäß IEEE-Spezifikation IEEE 802.1 AE; "IPsec/IKEv2" ein "**I**nternet **P**rotocol **sec**urity"-basierter Protokollstapel mit dem über ein "**I**nternet-**K**ey-**E**xchange"-Protokoll der **V**ersion **2** (aktuell Version) eine gesicherte Kommunikation über potentiell unsichere Netze wie das Internet ermöglicht werden soll; "TLS" ein "**T**ransport **L**ayer **S**ecurity"-basiertes hybrides Verschlüsselungsprotokoll zur sicheren Datenübertragung im Internet) und/oder Service-Zugängen zu IT-Systemen.

Dabei werden unterschiedliche kryptographische Algorithmen und Nutzungsarten unterstützt in Form von Cipher Suites und/oder Schlüssellängen der Krypto-Algorithmen. Es besteht ein Bedarf sicherzustellen, dass ausreichend starke Cipher Suites und/oder gewisse Mindestschlüssellängen über die gesamte Nutzungsdauer eines Computer-basierten Gerätes in dem System verwendet werden.

Es gibt bekannte Empfehlungen von unterschiedlichen Institutionen zu angemessenen Schlüssellängen. So sind z.B. unter https://www.keylength.com Schlüssellängen verfügbar. Diese basieren aber nur auf Schätzungen. Bis wann ein kryptographisches Verfahren mit einer bestimmten Schlüssellänge tatsächlich sicher ist, hängt auch von unvorhergesehenen Ereignissen ab, z.B. neuen Angriffsmethoden. Auch decken die Empfehlungen nur einen begrenzten Zeitraum ab [z.B. die Empfehlungen des Bundesamts für Sicherheit in der Informationstechnik (BSI) bis zum Jahr 2021]. Für System-Geräte, z.B. mit langer Nutzungsdauer von 10 oder 20 Jahren, wie das beispielsweise in Automatisierungssystemen der Fall ist, sind solche Aussagen aus heutiger Sicht daher nicht ausreichend.

Weiterhin ist es bekannt, dass technische Implementierungen von kryptographischen Verfahren (wie "OpenSSL" für das TLS-Protokoll oder "StrongSwan" für Authentisierung und Schlüsselvereinbarung bei IPsec) konfiguriert werden können. Dadurch kann eingeschränkt werden, welche Cipher Suites unterstützt werden.

Dieses wird heute jedoch speziell bei eingebetteten Systemen bei der Entwicklung oder Inbetriebnahme festgelegt, wohingegen die Empfehlungen zu Schlüssellängen manuell berücksichtigt werden können.

Es besteht daher die Gefahr, dass die Konfiguration nicht an eine geänderte Lage angepasst wird. Auch besteht die Gefahr, dass ein Nutzer bzw. Administrator schwache Verfahren aktiviert.

Speziell in Bezug auf Blockchains ist ein "Proof-of-Work" bekannt, bei dem Knoten zur Bestätigung eines Blocks der Blockchain eine komplexe Rechenaufgabe lösen müssen. Dabei wird die Komplexität der Rechenaufgabe adaptiv an die verfügbare Rechenleistung angepasst. (vgl. https://en.bitcoin.it/wiki/Proof of work).

Ein "Difficulty"-Parameter wird bei Bitcon dabei so gewählt, dass etwa alle 10 Minuten ein neuer Block der Blockchain gebildet wird. Einen Überblick über die zeitliche Entwicklung der "Difficulty" gibt z.B. http://bitcoindifficulty.com. Weitere Informationen zur Bitcon-Difficulty ist unter https://en.bitcoin.it/wiki/Difficulty verfügbar.
US 2008/0235801 beschreibt ein System, in dem ein Computer mit zusätzlicher Unterstützung eines entfernten Servers selbst seine Verwundbarkeit feststellt.

Die der Erfindung zugrundeliegende Aufgabe besteht darin, ein Verfahren und Computer zum kryptografischen Schützen von Steuerungskommunikation in und/oder Service-Zugang zu IT-Systemen, insbesondere im Zusammenhang mit der Diagnose und Konfiguration in einem Automatisierungs-, Steuerungs- oder Kontrollsystem, anzugeben, bei dem der kryptografische Schutz der Steuerungskommunikation und/oder des Service-Zugangs verbessert wird.

Diese Aufgabe wird ausgehend von dem im Oberbegriff des Patentanspruchs 1 definierten Verfahren durch die im Kennzeichen des Patentanspruches 1 angegebenen Merkmale gelöst.

Darüber hinaus wird die Aufgabe ausgehend von dem im Oberbegriff des Patentanspruchs 7 definierten Computer durch die im Kennzeichen des Patentanspruches 7 angegebenen Merkmale gelöst.

Die der Erfindung zugrundeliegende Idee gemäß der in den Ansprüchen 1 und 7 jeweils angegebenen technischen Lehre besteht darin, dass zum kryptografischen Schützen von Steuerungskommunikation in und/oder Service-Zugang zu IT-Systemen automatisch und dynamisch, insbesondere regelmäßig oder ereignisgesteuert, oder manuell, insbesondere auf Nutzeraufforderung hin, durch Autokonfiguration ermittelt wird, ob benutzte oder aktivierte und benutzbare Cipher Suites und/oder Schlüssellängen für einen aktuellen kryptografischen Schutz der Steuerungskommunikation und/oder des Service-Zugangs ausreichend stark sind, indem
**1)** durch Abfrage von im Netz/System verfügbaren "Cipher Suite"-bezogenen/-spezifischen Informationen Referenz-Cipher Suites und/oder
**2)** durch Abfrage oder Ermittlung von im Netz/System verfügbaren Blockchain-Informationen mit als "Proof of Work" bezeichneten Datensätzen zur Lösung von komplexen Rechenaufgaben mit der Ermittlung von Blockchain-Difficulty-Parameter als Schlüssellängen-Abschätzparameter angemessene Referenz-Schlüssellängen, insbesondere für Krypto-Algorithmen erforderliche Referenz-Mindestschlüssellängen, ermittelt werden sowie
**3)** die ermittelten Referenz-Cipher Suites und/oder die durch die Schlüssellängen-Abschätzparameter ermittelten Referenz-Schlüssellängen mit den benutzten oder aktivierten und benutzbaren Cipher Suites und/oder Schlüssellängen abgeglichen werden.

Dabei wird ohne explizite Administration ermittelt, welche Schlüssellänge bzw. Cipher Suites aktuell angemessen sind. Dazu wird in dem Netz, z.B. dem Internet, verfügbare Informationen, die "Cipher Suite"-bezogenen/-spezifischen Informationen und/oder die Blockchain-Informationen, verwendet und ausgewertet. Diese sind kaum manipulierbar:

Authentisierte, wohlbekannte Internet-Dienste werden produktiv verwendet. Die Sicherheit des jeweiligen Internet-Dienstes hängt an dessen Konfiguration. Daher ist es unplausibel, dass diese unsicher konfiguriert sind. Darüber hinaus kann durch einen Mehrheitsentscheid unter Verwendung von mehreren Internet-Diensten eine erhöhte Robustheit erreicht werden.

Die Blockchain-Difficulty bzw. der Blockchain-Difficulty-Parameter kann nicht nach unten manipuliert werden, da die Komplexität dezentral abhängig von der Rechenkapazität angepasst wird. Es gibt hier keine einzelne Instanz, die dies manipulieren könnte.

Dies kann gemäß dem Anspruch 7 in vorteilhafter Weise und ganz allgemein durch einen Computer geschehen, wobei dieser vorzugsweise als ein Feldgerät, Steuergerät, IoT-Gerät ("**I**nternet-**o**f-**T**hings"-Gerät), Projektierungs-, Service-, Test- oder Diagnosewerkzeug ausgebildet sein kann. Abhängig von der ermittelten Information können - gemäß den Ansprüchen 3 und 9 - die von dem Computer unterstützten Cipher Suites eingeschränkt werden (z.B. unsichere Cipher Suites sperren).

In einer anderen Variante - gemäß den Ansprüchen 3 und 9 - wird ein Warnhinweis ausgegeben, z.B. als akustisches Warnsignal oder der Hinweis wird optisch auf einem Display oder als elektrisches Schaltsignal angezeigt, z.B. in einem Service-Menü oder in Log-Eintrag, dass, z.B. in dem Computer, als unsicher bzw. nicht mehr zeitgemäß erkannte Cipher Suites aktiviert sind.

In einer weiteren Variante können aktivierbare bzw. aktivierte Ciphersuites als aktuell angemessen oder nicht angemessen gekennzeichnet (oder mehrstufig, z.B. rot, gelb grün gekennzeichnet) werden. Dadurch wird einem Nutzer, der selbst kein Security-Experte ist, eine Information bereitgestellt, welche Cipher Suites aktuell noch angemessen sind.

Es können weiterhin in vorteilhafter Weise unterschiedliche Aktionen zur Verwendung von Cipher Suites für die Steuerungskommunikation und/oder den Service-Zugang (beispielsweise zum Zweck der Diagnose und der Konfiguration) definiert sein. So kann z.B. die operative Kommunikation bei Verwendung einer als schwach klassifizierten Cipher Suite nur geloggt werden (Warnhinweis). Dagegen kann bei einem Service-Zugang bei Verwendung einer als schwach klassifizierten Cipher Suite nur noch ein Anzeigemöglichkeit bestehen, aber keine Änderung der Konfiguration möglich sein (es wird also abhängig von der verwendeten Cipher Suite eingeschränkt, welche Rollen bzw. Zugriffsberechtigung gewährbar sind).

Die Information, welche Cipher Suites als angemessen gelten, wird im Betrieb automatisch ermittelt bzw. aktualisiert. Dies kann auf unterschiedliche Art erfolgen (einzeln oder in Kombination) :
Es wird zu bekannten, als vertrauenswürdigen Internet-Diensten, eine kryptographisch geschützte Verbindung probeweise aufgebaut bzw. probeweise ein Verbindungsaufbau initiiert, um die von diesem Internet-Dienst unterstützten Cipher Suites abzufragen.

Es können mehrere Dienste abgefragt werden. Die Entscheidung kann als Schnittmenge oder Vereinigungsmenge der jeweils unterstützen Cipher Suites gebildet werden.

In einer anderen Variante wird ein Quorum oder Mehrheitsentscheid der unterstützen Cipher Suites gebildet. Dadurch kann von professionell administrierten Internet-Diensten gelernt werden, welche Cipher Suites aktuell von diesen unterstützt werden.

Die Abschätzung einer erforderlichen Mindestschlüssellänge erfolgt vorzugsweise unter Verwendung einer Blockchain. Blockchains, wie insbesondere Bitcoin, realisieren einen "Proof of Work", bei dem mindestens eine komplexe Rechenaufgaben gelöst werden muss. Abhängig von aktueller Blockchain-Komplexität (Bitcoin Difficulty), die ein Maß für die zur Verfügung stehende Rechenkapazität ist, wird eine Mindestschlüssellänge festgesetzt. Dazu wird die aktuelle Difficulty ermittelt und spezifisch für einen Kryptoalgorithmus [wie z.B. Advanced Encryption Standard (AES); RSA-Kryptosystem (nach Rivest, Shamir, Adleman); Digital Signature Algorithm (DSA); Elliptic Curve Digital Signature Algorithm (ECDSA), Secure Hash Algorithmus 2 (SHA2), Diffie-Hellman-Schlüsselvereinbarung (DH), Elliptic Curve Diffie-Hellman-Schlüsselvereinbarung (ECDH)] die jeweilige Mindestschlüssellänge bestimmt.

Weitere Vorteile der Erfindung ergeben sich aus der nachfolgenden Beschreibung eines Ausführungsbeispieles der Erfindung anhand der FIGUREN 1 bis 4. Diese zeigen:
FIGUR 1 ein typisches Netzwerkszenario im IT-Umfeld mit einer computerbasierten Steuerungskommunikation, z.B. zum Zweck von Diagnose und Konfiguration, in einem z.B. als Automatisierungs-, Steuerungs- oder Kontrollsystem ausgebildeten IT-System und/oder einem computerbasierten Service-Zugang zu einem weiteren IT-System,
FIGUR 2 den prinzipiellen Aufbau eines für die Steuerungskommunikation und/oder den Service-Zugang in dem Netzwerkszenario gemäß der FIGUR 1 verwendeten Computers,
FIGUR 3 ein erstes Ablaufdiagramm zum Prüfen des kryptografischen Schutzes der Steuerungskommunikation und/oder des Service-Zugangs auf der Basis von Cipher Suites,
FIGUR 4 ein zweites Ablaufdiagramm zum Prüfen des kryptografischen Schutzes der Steuerungskommunikation und/oder des Service-Zugangs auf der Basis von Schlüssellängen, insbesondere für Krypto-Algorithmen erforderliche Mindestschlüssellängen.

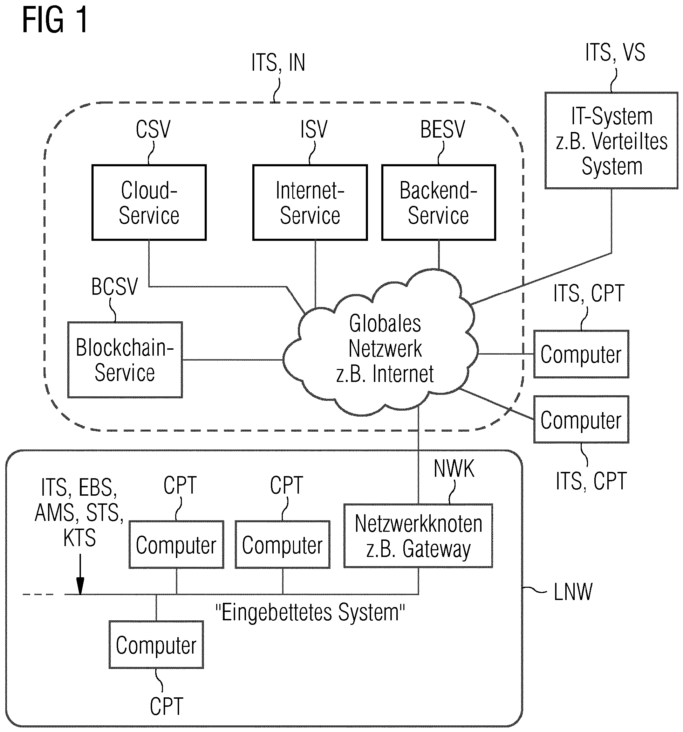

FIGUR 1 zeigt ein typisches Netzwerkszenario im IT-Umfeld mit einer computerbasierten Steuerungskommunikation, z.B. zum Zweck von Diagnose und Konfiguration, in einem, z.B. als Automatisierungssystem AMS, Steuerungssystem STS oder Kontrollsystem KTS ausgebildeten, IT-System ITS und/oder einem computerbasierten Service-Zugang zu einem weiteren IT-System ITS. Gemäß der in dem einleitenden Teil der vorliegenden Anmeldung gegebenen Definition für ein Informationstechnisches System kann das IT-System ITS ganz allgemein ein Verteiltes System, ein Eingebettetes System, ein Internet oder aber auch einen einzelnen Computer verkörpern. Dies ist in der FIGUR 1 ebenfalls exemplarisch gezeigt.

Danach verkörpert das Automatisierungssystem AMS, Steuerungssystem STS oder Kontrollsystem KTS ein Eingebettetes System EBS, das als ein drahtgebundenes oder drahtloses Lokalen Netzwerk LNW, insbesondere als ein Ethernet- oder WLANbasiertes Netzwerk, ausgebildet ist und in dem die computerbasierte Steuerungskommunikation stattfindet.

Weiterhin gibt es gemäß dem Netzwerkszenario ein vorzugsweise als Internet fungierendes Globales Netzwerk GNW, das in einem das IT-System verkörpernde Internet IN den Zugang zu diversen Services ermöglicht, als da vorzugsweise sind gemäß der FIGUR 1 zumindest ein Internet-Service ISV, zumindest ein Cloud-Service CSV, zumindest ein Backend-Service BESV und/oder zumindest ein Blockchain-Service BCSV, und das die computerbasierte Steuerungskommunikation innerhalb des Globalen Netzwerkes GNW, sprich netzwerkbeschränkt, zwischen einem das IT-System verkörpernden einzelnen Computer CPT ("Einzel-Computer-System") und einem das IT-System verkörpernden Verteilten System VS sowie netzübergreifend zwischen einerseits dem einzelnen Computer CPT und/oder dem Verteilten System VS und andererseits dem als Lokales Netzwerk LNW ausgebildeten Eingebetteten System EBS möglich macht.

Das Verteilte System VS als auch das Eingebettete System EBS sind gewöhnlich "Mehr-Computer-Systeme" (*in der* *FIGUR 1* *ist dies stellvertretend für beide Systeme nur bezüglich des Eingebetteten Systems EBS veranschaulicht*), in dem jeweils wie beim "Einzel-Computer-System" die netzwerkbeschränkte oder netzwerkübergreifende Steuerungskommunikation und/oder der Service-Zugang computerbasiert erfolgt. So ist in beiden Systemen EBS, VS jeweils pro netzwerkübergreifende Steuerungskommunikation und/oder pro Service-Zugang wie beim Einzel-Computer-System ein Computer CPT maßgeblich beteiligt. Die netzwerkübergreifende Steuerungskommunikation als auch der Service-Zugang wird dabei über einen Netzwerkknoten NWK, der beispielsweise als Gateway ausgebildet sein kann, in dem untergeordneten Netzwerk, gemäß der FIGUR 1 in dem Lokalen Netzwerk LNW, zu dem übergeordneten Netzwerk, gemäß der FIGUR 1 zu dem Globalen Netzwerk GNW, abgewickelt.

Bei der netzwerkbeschränkte Steuerungskommunikation hingegen können mindestens zwei der in dem System EBS, VS vorhandenen Computer CPT beteiligt sein.

In dem als "Mehr-Computer-System" ausgebildeten Eingebetteten System EBS ist der Computer CPT vorzugsweise als Feldgerät, Steuergerät, IoT-Gerät, Projektierungs-, Service-, Test- oder Diagnosewerkzeug ausgestaltet, um in dem Automatisierungssystem AMS, Steuerungssystem STS oder Kontrollsystem KTS anfallenden Aufgaben und Funktionen, z.B. System-Diagnose und System-Konfiguration, zu steuern. So z.B. in einem Automatisierungssystem AMS mit mehreren Feldgeräten und Services (z.B. Cloud Services, Internet Services Backend-Services etc.), wobei das Feldgerät mit einem Backend-Service regelmäßig kommuniziert, um z.B. Statusdaten des Gerätes für eine vorausschauende Wartung "Predictive Maintenance" zu übertragen. Diese Steuerungskommunikation kann z.B. durch das "IPsec/IKEv2"-Kommunikationsprotokoll oder das "TLS"-Verschlüsselungsprotokoll geschützt sein. Darüber hinaus können auch mehrere Feldgeräte in dem Automatisierungssystem AMS miteinander geschützt, z.B. über Ethernet-MACsec ("MACsec" gemäß IEEE-Spezifikation IEEE 802.1 AE) oder WLAN (Wireless Local Area Network gemäß IEEE 802.11), kommunizieren.

In dem "Einzel-Computer-System" hingegen ist der Computer CPT vorzugsweise ein ganz gewöhnlicher Desktop-Personal-Computer oder ein Notebook mit Zugriffsmöglichkeit ins Globale Netzwerk GNW respektive Internet.

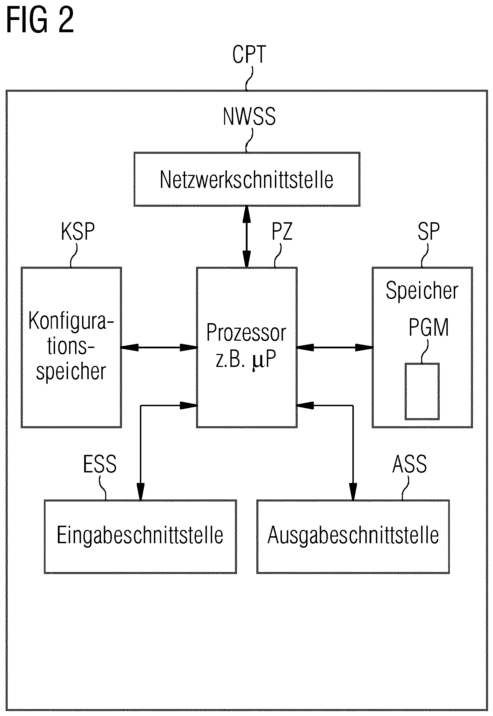

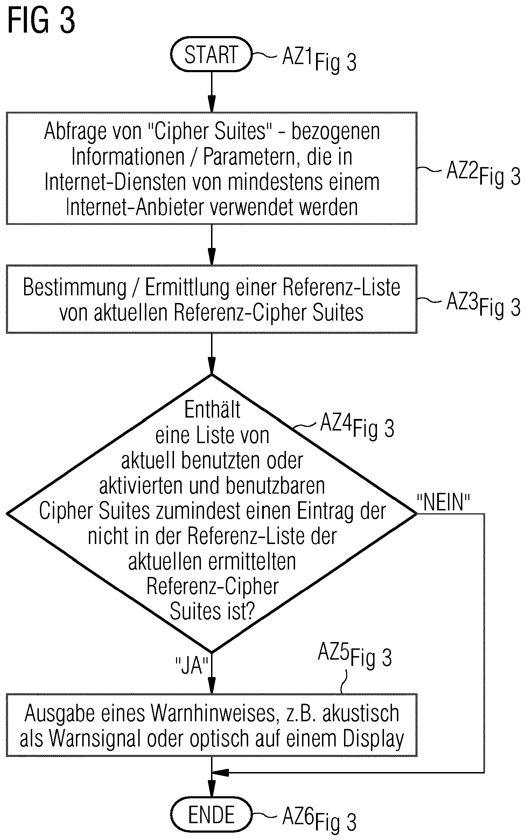

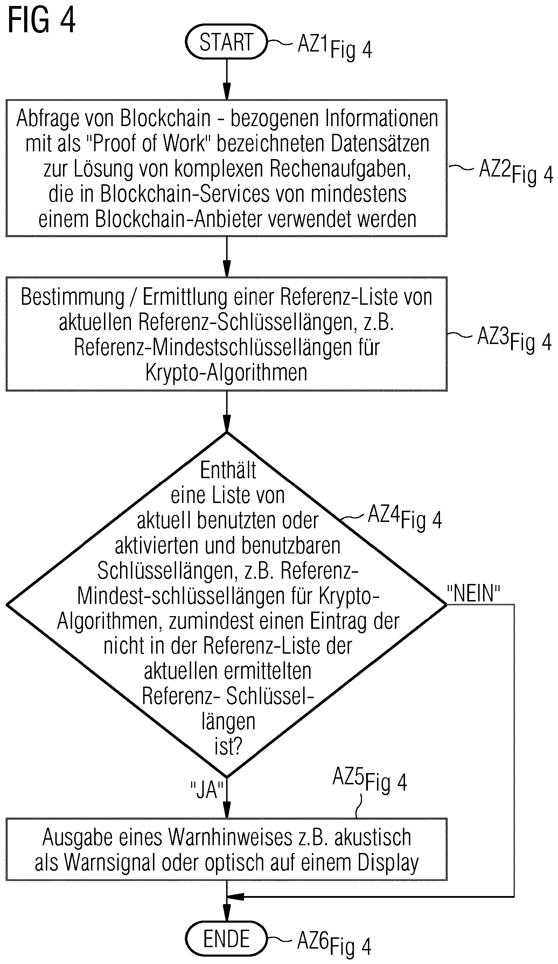

Für den im einleitenden Teil der vorliegenden Anmeldung erläuterten systemrelevanten Aspekt, nämlich die computerbasierte Steuerungskommunikation und/oder den computerbasierten Service-Zugang kryptografisch hinreichend sicher zu schützen, sind in dem Computer CPT zunächst Cipher Suites und/oder Schlüssellängen aktiviert und benutzbar oder aber die Cipher Suites und/oder Schlüssellängen werden schon explizit eingesetzt. Dabei haben insbesondere die aktivierten und benutzbaren oder benutzten Schlüssellängen für Krypto-Algorithmen erforderliche Mindestschlüssellängen. Für einen hinreichend sicheren Schutz ist dies aber häufig zu wenig, weil nicht sichergestellt werden kann, dass die Cipher Suites und/oder Schlüssellängen ausreichend stark sind. Anhand der nachfolgenden Beschreibung der FIGUREN 2 bis 4 wird erläuter wie in dem Computer CPT (FIGUR 2) durch entsprechende Maßnahmen oder durch eine entsprechend methodische Vorgehensweise (FIGUREN 3 und 4) die Verwendung von ausreichend starken Cipher Suites und/oder Schlüssellängen sichergestellt ist.

FIGUR 2 zeigt den prinzipiellen Aufbau eines für die Steuerungskommunikation und/oder den Service-Zugang in dem Netzwerkszenario gemäß der FIGUR 1 verwendeten Computers CPT. So weist der Computer CPT einen nicht-flüchtigen, lesbaren Speicher SP, in dem prozessorlesbare Steuerprogrammbefehle eines den kryptografischen Schutz der Steuerungskommunikation und/oder des Service-Zugangs steuernden Programm-Moduls PGM gespeichert sind, einen mit dem Speicher SP verbundenen, vorzugsweise als Mikro-Prozessor "µP" ausgebildeten, Prozessor PZ, der die Steuerprogrammbefehle des Programm-Moduls PGM ausführt, einen mit dem Prozessor PZ verbundenen Konfigurationsspeicher KSP, in dem die in dem Computer CPT aktivierten und benutzbaren oder aber die von diesem benutzten Cipher Suites und/oder Schlüssellängen Cipher Suites und/oder Schlüssellängen, vorzugsweise in einer Liste, gespeichert sind, eine mit dem Prozessor PZ verbundene Netzwerkschnittstelle NWSS, über die netzwerkbezogene bidirektionale Datenverkehr des Computers CPT hinsichtlich der computerbasierten Steuerungskommunikation und/oder des computerbasierten Service-Zugangs läuft und die zu diesem Zweck mit dem Netzwercknoten NWK eine Funktionseinheit bildet, sowie eine Eingabeschnittstelle ESS und eine Ausgabeschnittstelle ASS für benutzerspezifische Vorgänge im Zusammenhang mit dem kryptografischen Schützen der Steuerungskommunikation in und/oder des Service-Zugang zu dem IT-Systemen ITS.

Die vorstehend aufgeführten Komponenten des Computers CPT bilden eine Funktionseinheit und sind derart ausgebildet, dass entweder automatisch und dynamisch oder manuell durch Autokonfiguration ermittelt wird, ob die benutzten oder aktivierten und benutzbaren Cipher Suites und/oder Schlüssellängen für einen aktuellen kryptografischen Schutz der Steuerungskommunikation und/oder des Service-Zugangs ausreichend stark sind.

Die automatisch und dynamisch eingeleitete Ermittlung erfolgt vorzugsweise in regelmäßigen Abständen oder kann bei bestimmten auftretenden Ereignissen passieren (Ereignissteuerung). Unabhängig hiervon ist es vorteilhaft, wenn die Ermittlung in einem dedizierten Betriebsmodus des Computers CPT, z.B. im Wartungsmodus, erfolgt, um nicht andere Vorgänge oder Prozesse, die auf dem Computer laufen, zu beeinträchtigen

Bei der manuell eingeleiteten Ermittlung wird z.B. auf eine Aufforderung (z.B. Eingabe von Steuerkommandos) des Benutzers des Computers CPT über eine Eingabeschnittstelle ESS hin, die Autokonfiguration gestartet.

Über die Eingabeschnittstelle ESS ist es auch möglich, durch manuelle Konfiguration eine "Cipher Suite"-mäßig zumindest eingeschränkte Liste von aktivierten Cipher Suites oder die aktuell benutzte oder aktivierte und benutzbare Cipher Suite und/oder Schlüssellänge zu aktivieren.

Die Bestimmung, ob die benutzten oder aktivierten und benutzbaren Cipher Suites und/oder Schlüssellängen ausreichend stark sind, geschieht dadurch, dass
1) bei einem "Internet-Service (ISV)"-Zugang zu mindestens einem Anbieter von Internet-Diensten jeweils eine erste Kommunikationsverbindung und/oder bei einem "Blockchain-Service (BCSV)"-Zugang zu einem Anbieter von Blockchain-Services eine zweite Kommunikationsverbindung aufgebaut wird,
2) von dem Internet-Dienst des Internet-Anbieters verfügbare Informationen abgefragt werden, um für den kryptografischen Schutz der Steuerungskommunikation und/oder des Service-Zugangs angemessene Referenz-Cipher Suites zu ermitteln und/oder
3) zu den Blockchain-Services des Blockchain-Anbieters verfügbare Blockchain-Informationen mit als "Proof of Work" bezeichneten Datensätzen zur Lösung von komplexen Rechenaufgaben abgefragt oder ermittelt werden, um für den kryptografischen Schutz der Steuerungskommunikation und/oder des Service-Zugangs aus den Blockchain-Informationen durch die Ermittlung von Blockchain-Difficulty-Parameter als Schlüssellängen-Abschätzparameter angemessene Referenz-Schlüssellängen, z.B. die für Krypto-Algorithmen erforderliche Referenz-Mindestschlüssellängen, zu ermitteln und
4) die ermittelten Referenz-Cipher Suites und/oder die durch die Schlüssellängen-Abschätzparameter ermittelten Referenz-Schlüssellängen mit den in dem Konfigurationsspeicher KSP gespeicherten, benutzten oder aktivierten und benutzbaren Cipher Suites und/oder Schlüssellängen abgeglichen werden.

Bei den Informationen, die gemäß der Punkte 1) und 2) abgefragt werden, handelt es sich um z.B. Parameter/Informationen mit einem eindeutigen "Cipher Suite"-Bezug, die in Internet Diensten von Internet-Anbietern verwendet werden. Werden bei der Abfrage Informationen von mehreren Internet-Dienstanbietern abgefragt, dass dann diese Informationen für die Ermittlung der angemessenen Referenz-Cipher Suites gewichtet werden.

Bei den Blockchain-Informationen, die gemäß dem Punkt 3) abgefragt bzw. ermittelt werden, wird entweder der Block der Blockchain direkt oder ein Metadienst über eine Blockchain abgefragt, um einen aktuellen Blockchain-Difficulty-Parameter zu ermitteln.

Das Aufbauen der Verbindungen muss nicht gewollt oder absichtlich zum Zweck der Datenübertragung motiviert sein, sondern erfolgt vorzugsweise probeweise oder probehalber. Das bedeutet, dass der Computer CPT ohne eigentliche Nutzdatenkommunikation eine sichere Kommunikationsverbindung zu Internet-Diensten, wie z.B. Microsoft®, Amazon®, Google®, IBM®, Siemens®, etc., aufbaut. Diese Kommunikation kann z.B. wieder durch das "IPsec/IKEv2"-Kommunikationsprotokoll oder das "TLS"-Verschlüsselungsprotokoll geschützt sein.

Das Abfragen der Informationen muss nicht zwingend auf der aufgebauten ersten und zweiten Kommunikationsverbindung erfolgen, sondern kann auch auf einer Verbindung mit Nutzdatenkommunikation passieren.

Das Speichern der ermittelten Referenz-Cipher Suites und/oder Referenz-Schlüssellängen kann wie das Speichern der in dem Computer CPT aktivierten und benutzbaren oder aber der von diesem benutzten Cipher Suites und/oder Schlüssellängen auch in einer Liste, vorzugsweise in einer Referenz-Liste, passieren. In diesem Fall bietet es sich an und ist auch zweckmäßig, dass der Abgleich listenweise durchgeführt wird.

Ergibt der gemäß dem Punkt 4) durchgeführte Abgleich einer dedizierten, aktuell benutzten oder aktivierten und benutzbaren Cipher Suite und/oder Schlüssellänge der in dem Konfigurationsspeicher KSP gespeicherten Cipher Suites und/oder Schlüssellängen mit den ermittelten Referenz-Cipher Suites und/oder den bestimmten Referenz-Schlüssellängen, dass die aktuell benutzte oder aktivierte und benutzbare Cipher Suite und/oder Schlüssellänge nicht unter den ermittelten Referenz-Cipher Suites und/oder den bestimmten Referenz-Schlüssellängen ist, dass dann
a) ein an den Benutzer des Computers CPT adressierter Warnhinweis erzeugt und über die Ausgabeschnittstelle ASS ausgegeben wird,
b) die aktuell benutzte Cipher Suite und/oder Schlüssellänge unverzüglich gesperrt wird, und/oder
c) die aktuell benutzte Cipher Suite und/oder Schlüssellänge nach einer Karenzzeit des ausgegebenen Warnhinweises gesperrt wird.

Der Warnhinweis kann dabei akustisch, z.B. als Warnsignal, oder aber optisch auf einem Display oder als elektrisches Schaltsignal ausgegeben werden.

Kommt es aufgrund des durchgeführten Abgleichs zu einer Sperrung der aktuell benutzten oder aktivierten und benutzbaren Cipher Suite und/oder Schlüssellänge, so wird entweder automatisch nach einer Wartezeit oder nach Bestätigung durch einen Servicetechniker über die Eingabeschnittstelle ESS die für den Abgleich herangezogene Referenz-Cipher Suite und/oder Referenz-Schlüssellänge für die Benutzung/Aktivierung in dem Computer CPT übernommen.

FIGUR 3 zeigt ein erstes Ablaufdiagramm mit mehreren Ablaufzuständen AZ1_{FIG3}...AZ6_{FIG3} zum Prüfen des kryptografischen Schutzes der Steuerungskommunikation und/oder des Service-Zugangs auf der Basis von Cipher Suites. In einem ersten Ablaufzustand AZ1_{FIG3} wird die Prüfung des kryptografischen Schutzes der Steuerungskommunikation und/oder des Service-Zugangs gestartet.

Danach werden in einem zweiten Ablaufzustand AZ2_{FIG3} "Cipher Suite"-bezogene Informationen/Parameter, die in Internet Diensten von Internet-Anbietern verwendet werden, abgefragt. Dabei werden vorzugsweise Informationen aus mehreren als Referenz dienenden Quellen (Internet Diensten von Internet-Anbietern) durch Abfrage ermittelt, um daraus und in Abhängigkeit von den durch Abfrage ermittelten Daten/Informationen in einem dritten Ablaufzustand AZ3_{FIG3} eine, z.B. plausibilisierte, Referenz-Liste aktuell angemessener Referenz-Cipher Suites zu bestimmen. Dabei können z.B. unterschiedliche Informationsquellen gewichtet werden, z.B. Aufnahme in die Referenz-Liste, wenn eine Referenz-Cipher Suite von mindestens 3 Quellen (Internet-Dienste von 3 Internet-Anbietern) unterstützt wird, oder wenn mindestens 50% der Quellen (Internet-Dienste von mehreren Internet-Anbietern) die Referenz-Cipher Suite unterstützen.

Es kann weiterhin eine Filterung nach einer Mindestschlüssellänge erfolgen, die abhängig von der Difficulty einer Blockchain ermittelt wird (vgl. FIGUR 4).

Die Referenz-Liste aktueller Referenz-Cipher Suites kann zudem für das gleiche Kommunikationsprotokoll gelten, das für die Abfrage der aktuellen Referenz-Cipher Suites verwendet wurde - z.B. das von Google verwendete "**T**ransport **L**ayer **S**ecurity"-basierte hybride Verschlüsselungsprotokoll zur sicheren Datenübertragung im Internet, um die von Google® verwendeten Referenz-Cipher Suites bei Nutzung des TLS-Protokolls zu ermitteln.

Vorzugsweise erfolgt die Verwendung aber für weitere Anwendungen, z.B. Referenz-Cipher Suites, die für ein anderes Protokoll ermittelt werden. So können aktuell zulässige Referenz-Cipher Suites für "MACsec" oder "IKEv2/IPsec" abhängig davon bestimmt werden, welche Referenz-Cipher Suites Google® bei "TLS" unterstützt und welche Difficulty bei einer Bitcon Blockchain aktuell gilt. Auch können zulässige Referenz-Cipher Suites für weitere Sicherheitsanwendungen wie Dateisystemverschlüsselung, Nachrichtenschutz bei Publish/Subscribe-Messaging-Diensten, XML-Security etc. angepasst werden.

Anschließend wird diese Referenz-Liste aktueller Referenz-Cipher Suites in einem vierten Ablaufzustand AZ4_{FIG3} mit der, z.B. in dem Konfigurationsspeicher KSP des Computers CPT (vgl. FIGUR 2) gespeicherten, Liste mit den in dem Computer benutzten oder aktivierten und benutzbaren Cipher Suites - d.h. die auf dem Computer technisch unterstützen Cipher Suites bzw. die durch manuelle Konfiguration aktivierten Cipher Suites - abgeglichen. Mit dem Abgleichergebnis erfolgt dabei die Abfrage nach der Maßgabe: "Enthält eine Liste von aktuell benutzten oder aktivierten und benutzbaren Cipher Suites zumindest einen Eintrag, der nicht in der Referenz-Liste der aktuell ermittelten Referenz-Cipher Suites ist?"

Lautet die Antwort auf diese Abfrage "JA", dann wird in einem fünften Ablaufzustand AZ5_{FIG3} ein Warnhinweis, z.B. akustisch als Warnsignal oder optisch auf einem Display oder als elektrisches Schaltsignal, ausgegeben. Im anderen Fall, wenn die Antwort auf diese Abfrage "NEIN" ist, dann ist in einem sechsten Ablaufzustand AZ6_{FIG3} die Prüfung des kryptografischen Schutzes der Steuerungskommunikation und/oder des Service-Zugangs beendet.

Bei dieser Abfrage wird mit anderen Worten geklärt, ob eine Cipher Suite unterstützt wird, die nicht in der Referenz-Liste aktuell angemessener Referenz-Cipher Suites enthalten ist. Ist das der Fall, so erfolgt z.B. eine Warnung, vorzugsweise in Form eines Warnhinweises im Service-Menü des Computers, als Logging-Event bei Erkennen, als Logging-Event bei Nutzung. In einer anderen alternativen Variante wird diese Cipher Suite automatisch gesperrt, z.B. sofort oder nach einer gewissen Karenzzeit nach Ausgabe des Warnhinweises.

Die in der FIGUR 3 dargestellte Prüfung erfolgt - wie auch die gemäß FIGUR 2 mit der dazugehörigen Figurenbeschreibung durchgeführten Ermittlungen zum kryptografischen Schutz der Steuerungskommunikation und/oder des Service-Zugangs - vorzugsweise regelmäßig oder ereignisgesteuert. Außerdem findet die Prüfung vorzugsweise in einem bestimmten Betriebsmodus des Computers statt (z.B. im Wartungsmodus). Zudem können die Änderungen auch automatisch übernommen werden, automatisch nach einer Wartezeit, oder nach Bestätigung durch einen Servicetechniker (z.B. Bestätigung in den Konfigurationseinstellungen in einem Service-Menü des Computers).

FIGUR 4 zeigt ein zweites Ablaufdiagramm mit mehreren Ablaufzuständen AZ1_{FIG4}...AZ6_{FIG4} zum Prüfen des kryptografischen Schutzes der Steuerungskommunikation und/oder des Service-Zugangs auf der Basis von Schlüssellängen, insbesondere für Krypto-Algorithmen erforderliche Mindestschlüssellängen. In einem ersten Ablaufzustand AZ1_{FIG4} wird die Prüfung des kryptografischen Schutzes der Steuerungskommunikation und/oder des Service-Zugangs gestartet.

Danach werden in einem zweiten Ablaufzustand AZ2_{FIG4} Blockchain-Informationen mit als "Proof of Work" bezeichneten Datensätzen zur Lösung von komplexen Rechenaufgaben, die in Blockchain-Services eines Blockchain-Anbieters verwendet werden, abgefragt. Dabei werden vorzugsweise Informationen aus mehreren als Referenz dienenden Quellen (Blockchain-Services von Blockchain-Anbietern oder von eine Blockchain realisierenden Blockchain-Knoten) durch Abfrage ermittelt, um daraus und in Abhängigkeit von den durch Abfrage ermittelten Daten/Informationen in einem vierten Ablaufzustand AZ3_{FIG4} eine, z.B. plausibilisierte, Referenz-Liste aktuell angemessener Referenz-Schlüssellängen, z.B. Referenz-Mindestschlüssellängen für Krypto-Algorithmen, zu bestimmen. Dabei können z.B. unterschiedliche Informationsquellen gewichtet werden, z.B. Aufnahme in die Referenz-Liste, wenn eine Referenz-Schlüssellänge, insbesondere Referenz-Mindestschlüssellänge, von mindestens 3 Quellen (Blockchain-Services von 3 Blockchain-Anbietern oder von eine Blockchain realisierenden Blockchain-Knoten) unterstützt wird, oder wenn mindestens 50% der Quellen (Blockchain-Services von mehreren Blockchain-Anbietern oder von einer Mehrzahl von eine Blockchain realisierenden Blockchain-Knoten) die Referenz-Schlüssellänge, insbesondere Referenz-Mindestschlüssellänge, unterstützen. Dabei können unterschiedliche Blockchains geprüft werden, z.B. Bitcoin, Ethereum und Hyperledger.

Es kann weiterhin eine Filterung nach einer Mindestschlüssellänge erfolgen, die abhängig von der Difficulty einer Blockchain ermittelt wird.

Anschließend wird diese Referenz-Liste aktueller Referenz-Schlüssellängen, insbesondere Referenz-Mindestschlüssellängen, in einem vierten Ablaufzustand AZ4_{FIG4} mit der, z.B. in dem Konfigurationsspeicher KSP des Computers CPT (vgl. FIGUR 2) gespeicherten, Liste mit den in dem Computer benutzten oder aktivierten und benutzbaren Schlüssellängen, insbesondere Mindestschlüssellängen, - d.h. die auf dem Computer technisch unterstützen Schlüssellängen, insbesondere Mindestschlüssellängen, bzw. die durch manuelle Konfiguration aktivierten Schlüssellängen, insbesondere Mindestschlüssellängen, - abgeglichen. Mit dem Abgleichergebnis erfolgt dabei die Abfrage nach der Maßgabe: "Enthält eine Liste von aktuell benutzten oder aktivierten und benutzbaren Schlüssellängen, insbesondere Mindestschlüssellängen, zumindest einen Eintrag, der nicht in der Referenz-Liste der aktuell ermittelten Referenz-Schlüssellängen, insbesondere Referenz-Mindestschlüssellängen, ist?"

Lautet die Antwort auf diese Abfrage "JA", dann wird in einem fünften Ablaufzustand AZ5_{FIG4} ein Warnhinweis, z.B. akustisch als Warnsignal oder optisch auf einem Display oder als elektrisches Schaltsignal, ausgegeben. Im anderen Fall, wenn die Antwort auf diese Abfrage "NEIN" ist, dann ist in einem sechsten Ablaufzustand AZ6_{FIG4} die Prüfung des kryptografischen Schutzes der Steuerungskommunikation und/oder des Service-Zugangs beendet.

Bei dieser Abfrage wird mit anderen Worten geklärt, ob eine Schlüssellänge, insbesondere Mindestschlüssellänge, unterstützt wird, die nicht in der Referenz-Liste aktuell angemessener Referenz-Schlüssellängen, insbesondere Referenz-Mindestschlüssellängen, enthalten ist. Ist das der Fall, so erfolgt z.B. eine Warnung, vorzugsweise in Form eines Warnhinweises im Service-Menü des Computers, als Logging-Event bei Erkennen, als Logging-Event bei Nutzung. In einer anderen alternativen Variante wird diese Schlüssellänge, insbesondere Mindestschlüssellänge, automatisch gesperrt, z.B. sofort oder nach einer gewissen Karenzzeit nach Ausgabe des Warnhinweises.

Die in der FIGUR 4 dargestellte Prüfung erfolgt - wie auch die gemäß FIGUR 2 mit der dazugehörigen Figurenbeschreibung durchgeführten Ermittlungen zum kryptografischen Schutz der Steuerungskommunikation und/oder des Service-Zugangs - wieder (wie die in der FIGUR 3 dargestellte Prüfung) vorzugsweise regelmäßig oder ereignisgesteuert. Außerdem findet die Prüfung wieder vorzugsweise in einem bestimmten Betriebsmodus des Computers statt (z.B. im Wartungsmodus). Zudem können die Änderungen auch wieder automatisch übernommen werden, automatisch nach einer Wartezeit, oder nach Bestätigung durch einen Servicetechniker (z.B. Bestätigung in den Konfigurationseinstellungen in einem Service-Menü des Computers).

## Patentansprüche

1. Verfahren zum kryptografischen Schützen von Steuerungskommunikation in und/oder Service-Zugang zu IT-Systemen (ITS), insbesondere im Zusammenhang mit der Diagnose und Konfiguration in einem Automatisierungs-, Steuerungs- oder Kontrollsystem (AMS, STS, KTS), bei dem
**a)** die Steuerungskommunikation zwischen, vorzugsweise als Feldgerät, Steuergerät, IoT-Gerät, Projektierungs-, Service-, Test- oder Diagnosewerkzeug ausgebildeten, Computern (CPT) innerhalb eines drahtgebundenen oder drahtlosen Lokalen Netzwerkes (LNW), insbesondere eines Ethernet- oder WLAN-basierten Netzwerkes, oder netzwerkübergreifend von dem Lokalen Netzwerk (LNW) zu einem Globalen Netzwerk (GNW), insbesondere dem Internet (IN), stattfindet,
**b)** der Service-Zugang entweder netzwerkübergreifend von dem Lokalen Netzwerk (LNW) oder direkt in das Globale Netzwerk (GNW, IN) zu mindestens einem Internet-Service (ISV), zu mindestens einem Cloud-Service (CSV), zu mindestens einem Backend-Service (BESV) und/oder zu mindestens einem Blockchain-Service (BCSV) erfolgt,
**c)** mehrere unterschiedliche, von Kommunikationsprotokollen für die Steuerungskommunikation und/oder den Service-Zugang unterstützte sowie zum kryptografischen Schützen der Steuerungskommunikation und/oder des Service-Zugangs in dem Computer (CPT) benutzte oder aktivierte und benutzbare Cipher Suites und/oder Schlüssellängen, insbesondere für Krypto-Algorithmen erforderliche Mindestschlüssellängen, vorzugsweise in einer Liste, gespeichert werden,
**dadurch gekennzeichnet, dass**
**d)** automatisch und dynamisch, insbesondere regelmäßig oder ereignisgesteuert, oder manuell, insbesondere auf Nutzeraufforderung hin, durch Autokonfiguration ermittelt wird, ob die benutzten oder aktivierten und benutzbaren Cipher Suites und/oder Schlüssellängen für einen aktuellen kryptografischen Schutz der Steuerungskommunikation und/oder des Service-Zugangs ausreichend stark sind, indem
**d1)** im Zuge eines "Internet-Service (ISV)"-Zugangs zu mindestens einem Anbieter von Internet-Diensten jeweils eine erste Kommunikationsverbindung und/oder im Zuge eines "Blockchain-Service (BCSV)"-Zugangs zu mindestens einem Anbieter von Blockchain-Services oder zu mindestens einen eine Blockchain realisierenden Blockchain-Knoten eine zweite Kommunikationsverbindung, vorzugsweise jeweils probeweise, aufgebaut wird,
**d2)** von dem Internet-Dienst des Internet-Anbieters verfügbare "Cipher Suite"-bezogene/-spezifische, insbesondere den Internet-Dienst des Internet-Anbieters unterstützende Cipher Suites, Informationen, insbesondere auf der aufgebauten ersten Kommunikationsverbindung, abgefragt werden, um für den kryptografischen Schutz der Steuerungskommunikation und/oder des Service-Zugangs angemessene, vorzugsweise in einer Referenz-Liste gespeicherte, Referenz-Cipher Suites zu ermitteln und/oder zu den Blockchain-Services des Blockchain-Anbieters oder zu den Blockchains der diese realisierenden Blockchain-Knoten verfügbare Blockchain-Informationen mit als "Proof of Work" bezeichneten Datensätzen zur Lösung von komplexen Rechenaufgaben, insbesondere auf der aufgebauten zweiten Kommunikationsverbindung, abgefragt oder ermittelt werden, um für den kryptografischen Schutz der Steuerungskommunikation und/oder des Service-Zugangs aus den Blockchain-Informationen durch die Ermittlung von Blockchain-Difficulty-Parameter als Schlüssellängen-Abschätzparameter angemessene, vorzugsweise in einer Referenz-Liste gespeicherte, Referenz-Schlüssellängen, insbesondere für Krypto-Algorithmen erforderliche Referenz-Mindestschlüssellängen, zu ermitteln,
**d3)** die ermittelten Referenz-Cipher Suites und/oder die durch die Schlüssellängen-Abschätzparameter ermittelten Referenz-Schlüssellängen mit den gespeicherten, benutzten oder aktivierten und benutzbaren Cipher Suites und/oder Schlüssellängen, vorzugsweise listenweise, abgeglichen werden.

2. Verfahren nach Anspruch 1, **dadurch gekennzeichnet, dass** eine "Cipher Suite"-mäßig zumindest eingeschränkte Liste von aktivierten Cipher Suites oder die aktuell benutzte oder aktivierte und benutzbare Cipher Suite und/oder Schlüssellänge durch manuelle Konfiguration aktiviert wird.

3. Verfahren nach Anspruch 1 oder 2, **dadurch gekennzeichnet, dass**
wenn der Abgleich einer aktuell benutzten oder aktivierten und benutzbaren Cipher Suite und/oder Schlüssellänge der gespeicherten Cipher Suites und/oder Schlüssellängen mit den ermittelten Referenz-Cipher Suites und/oder den bestimmten Referenz-Schlüssellängen ergibt, dass die aktuell benutzte oder aktivierte und benutzbare Cipher Suite und/oder Schlüssellänge nicht unter den ermittelten Referenz-Cipher Suites und/oder den bestimmten Referenz-Schlüssellängen ist, dass dann
(i) ein an den Benutzer des Computers (CPT) adressierter Warnhinweis erzeugt und ausgegeben wird,
(ii) die aktuell benutzte oder aktivierte und benutzbare Cipher Suite und/oder Schlüssellänge unverzüglich gesperrt wird, und/oder
(iii) die aktuell benutzte oder aktivierte und benutzbare Cipher Suite und/oder Schlüssellänge nach einer Karenzzeit des ausgegebenen Warnhinweises gesperrt wird.

4. Verfahren nach Anspruch 1, 2 oder 3, **dadurch gekennzeichnet, dass**
die automatisch und dynamisch, insbesondere regelmäßig oder ereignisgesteuert, durchgeführte Ermittlung in einem dedizierten Betriebsmodus des Computers (CPT), z.B. im Wartungsmodus, erfolgt.

5. Verfahren nach Anspruch 3, **dadurch gekennzeichnet, dass** die Referenz-Cipher Suite und/oder Referenz-Schlüssellänge, die zur Sperrung der aktuell benutzten oder aktivierten und benutzbaren Cipher Suite und/oder Schlüssellänge geführt hat, automatisch nach einer Wartezeit oder nach Bestätigung durch einen Servicetechniker übernommen wird/werden.

6. Verfahren nach einem der Ansprüche 1 bis 5, **dadurch gekennzeichnet, dass**
die von den Internet-Dienstanbietern abgefragten Informationen für die Ermittlung der angemessenen Referenz-Cipher Suites gewichtet werden.

7. Computer (CPT) zum kryptografischen Schützen von Steuerungskommunikation in und/oder Service-Zugang zu IT-Systemen (ITS), insbesondere im Zusammenhang mit der Diagnose und Konfiguration in einem Automatisierungs-, Steuerungs- oder Kontrollsystem (AMS, STS, KTS), der, vorzugsweise als Feldgerät, Steuergerät, IoT-Gerät, Projektierungs-, Service-, Test- oder Diagnosewerkzeug ausgestaltet,
**a)** eine Netzwerkschnittstelle (NWSS) sowie einen Konfigurationsspeicher (KSP) aufweist, die derart ausgebildet sind, dass
**a1)** über die Netzwerkschnittstelle (NWSS) die Steuerungskommunikation mit weiteren Computern (CPT) innerhalb eines drahtgebundenen oder drahtlosen Lokalen Netzwerkes (LNW), insbesondere eines Ethernet- oder WLAN-basierten Netzwerkes, oder netzwerkübergreifend über einen mit der Netzwerkschnittstelle (NWSS) verbindbaren Netzwerkknoten (NWK) des Lokalen Netzwerkes (LNW) von dem Lokalen Netzwerk (LNW) zu einem Globalen Netzwerk (GNW), insbesondere dem Internet (TCP/IP), stattfindet,
**a2)** über die Netzwerkschnittstelle (NWSS) der Service-Zugang entweder netzwerkübergreifend, über den mit der Netzwerkschnittstelle (NWSS) verbindbaren Netzwerkknoten (NWK) des Lokalen Netzwerkes (LNW), oder direkt in das Globale Netzwerk (GNW, TCP/IP) zu mindestens einem Internet-Service (ISV), zu mindestens einem Cloud-Service (CSV), zu mindestens einem Backend-Service (BESV) und/oder zu mindestens einem Blockchain-Service (BCSV) erfolgt,
**a3)** in dem Konfigurationsspeicher (KSP) mehrere unterschiedliche, von Kommunikationsprotokollen für die Steuerungskommunikation und/oder den Service-Zugang unterstützte sowie zum kryptografischen Schützen der Steuerungskommunikation und/oder des Service-Zugangs im Computer (CPT) benutzte oder aktivierte und benutzbare Cipher Suites und/oder Schlüssellängen, insbesondere für Krypto-Algorithmen erforderliche Mindestschlüssellängen, vorzugsweise in einer Liste, gespeichert werden,
**gekennzeichnet durch**
**b)** einen nicht-flüchtigen, lesbaren Speicher (SP), in dem prozessorlesbare Steuerprogrammbefehle eines den kryptografischen Schutz der Steuerungskommunikation und/oder des Service-Zugangs steuernden Programm-Moduls (PGM) gespeichert sind, und einen mit dem Speicher (SP) verbundenen Prozessor (PZ), der die Steuerprogrammbefehle des Programm-Moduls (PGM) ausführt, mit der Netzwerkschnittstelle (NWSS) und dem Konfigurationsspeicher (KSP) verbunden ist und zur Steuerung des kryptografischen Schutzes der Steuerungskommunikation und/oder des Service-Zugangs mit der Netzwerkschnittstelle (NWSS) und dem Konfigurationsspeicher (KSP) als Funktionseinheit derart ausgebildet ist, dass
**b1)** automatisch und dynamisch, insbesondere regelmäßig oder ereignisgesteuert, oder manuell, insbesondere auf Nutzeraufforderung über eine Eingabeschnittstelle (ESS) hin, die mit dem Prozessor (PZ) verbunden ist, durch Autokonfiguration ermittelt wird, ob die benutzten oder aktivierten und benutzbaren Cipher Suites und/oder Schlüssellängen für einen aktuellen kryptografischen Schutz der Steuerungskommunikation und/oder des Service-Zugangs ausreichend stark sind, indem
**b2)** im Zuge eines "Internet-Service (ISV)"-Zugangs zu mindestens einem Anbieter von Internet-Diensten jeweils eine erste Kommunikationsverbindung und/oder im Zuge eines "Blockchain-Service (BCSV)"-Zugangs zu mindestens einem Anbieter von Blockchain-Services eine zweite Kommunikationsverbindung, vorzugsweise jeweils probeweise, aufgebaut wird,
**b3)** von dem Internet-Dienst des Internet-Anbieters verfügbare Informationen, insbesondere auf der aufgebauten ersten Kommunikationsverbindung, abgefragt werden, um für den kryptografischen Schutz der Steuerungskommunikation und/oder des Service-Zugangs angemessene, vorzugsweise in einer Referenz-Liste gespeicherte, Referenz-Cipher Suites zu ermitteln und/oder zu den Blockchain-Services des Blockchain-Anbieters oder zu den Blockchains der diese realisierenden Blockchain-Knoten verfügbare Blockchain-Informationen mit als "Proof of Work" bezeichneten Datensätzen zur Lösung von komplexen Rechenaufgaben, insbesondere auf der aufgebauten zweiten Kommunikationsverbindung, abgefragt oder ermittelt werden, um für den kryptografischen Schutz der Steuerungskommunikation und/oder des Service-Zugangs aus den Blockchain-Informationen durch die Ermittlung von Blockchain-Difficulty-Parameter als Schlüssellängen-Abschätzparameter angemessene, vorzugsweise in einer Referenz-Liste gespeicherte, Referenz-Schlüssellängen, insbesondere für Krypto-Algorithmen erforderliche Referenz-Mindestschlüssellängen, zu ermitteln,
**b4)** die ermittelten Referenz-Cipher Suites und/oder die durch die Schlüssellängen-Abschätzparameter ermittelten Referenz-Schlüssellängen mit den in dem Konfigurationsspeicher (KSP) gespeicherten, benutzten oder aktivierten und benutzbaren Cipher Suites und/oder Schlüssellängen, vorzugsweise listenweise, abgeglichen werden.

8. Computer (CPT) nach Anspruch 7, **dadurch gekennzeichnet, dass**
eine Eingabeschnittstelle (ESS) enthalten ist, die mit dem Prozessor (PZ) verbunden ist und durch die Verbindung eine erste Funktionseinheit bildet, die derart ausgestaltet ist, dass eine "Cipher Suite"-mäßig zumindest eingeschränkte Liste von aktivierten Cipher Suites oder die aktuell benutzte oder aktivierte und benutzbare Cipher Suite und/oder Schlüssellänge durch manuelle Konfiguration aktiviert wird.

9. Computer (CPT) nach Anspruch 7 oder 8, **dadurch gekennzeichnet, dass**
eine Ausgabeschnittstelle (ASS) enthalten ist, die mit dem Prozessor (PZ) verbunden ist und durch diese Verbindung zusammen mit dem vom Prozessor (PZ) ausgeführten Progamm-Modul (PGM) und dem Konfigurationsspeicher () eine zweite Funktionseinheit bildet, die derart ausgestaltet ist, dass, wenn der Abgleich einer aktuell benutzten oder aktivierten und benutzbaren Cipher Suite und/oder Schlüssellänge der in dem Konfigurationsspeicher (KSP) gespeicherten Cipher Suites und/oder Schlüssellängen mit den ermittelten Referenz-Cipher Suites und/oder den bestimmten Referenz-Schlüssellängen ergibt, dass die aktuell benutzte oder aktivierte und benutzbare Cipher Suite und/oder Schlüssellänge nicht unter den ermittelten Referenz-Cipher Suites und/oder den bestimmten Referenz-Schlüssellängen ist, dass dann
(i) ein an den Benutzer des Computers (CPT) adressierter Warnhinweis erzeugt und über die Ausgabeschnittstelle (ASS) ausgegeben wird,
(ii) die aktuell benutzte Cipher Suite und/oder Schlüssellänge unverzüglich gesperrt wird, und/oder
(iii) die aktuell benutzte Cipher Suite und/oder Schlüssellänge nach einer Karenzzeit des ausgegebenen Warnhinweises gesperrt wird.

10. Computer (CPT) nach Anspruch 7, 8 oder 9, **dadurch gekennzeichnet, dass**
der Prozessor (PZ) und das Programm-Modul (PGM) derart ausgebildet sind, dass die automatisch und dynamisch, insbesondere regelmäßig oder ereignisgesteuert, durchgeführte Ermittlung in einem dedizierten Betriebsmodus des Computers (CPT), z.B. im Wartungsmodus, erfolgt.

11. Computer (CPT) nach Anspruch 9, **dadurch gekennzeichnet, dass**
der Prozessor (PZ) und das Programm-Modul (PGM) derart ausgebildet sind, dass die Referenz-Cipher Suite und/oder Referenz-Schlüssellänge die zur Sperrung der aktuell benutzten oder aktivierten und benutzbaren Cipher Suite und/oder Schlüssellänge geführt hat, automatisch nach einer Wartezeit oder nach Bestätigung durch einen Servicetechniker über die Eingabeschnittstelle (ESS) übernommen wird/werden.

12. Computer (CPT) nach einem der Ansprüche 7 bis 11, **dadurch gekennzeichnet, dass**
der Prozessor (PZ) und das Programm-Modul (PGM) derart ausgebildet sind, dass die von den Internet-Dienstanbietern abgefragten Informationen für die Ermittlung der angemessenen Referenz-Cipher Suites gewichtet werden.

## Claims

1. Method for cryptographically protecting control communication in and/or service access to IT systems (ITS), in particular in connection with the diagnosis and configuration in an automation, control or supervisory system (AMS, STS, KTS), in which
**a)** the control communication takes place between computers (CPT), preferably embodied as a field device, control device, IoT device, planning tool, servicing tool, testing tool or diagnosis tool, within a wire-bound or wireless local network (LNW), in particular an Ethernet-based or WLAN-based network, or across different networks from the local network (LNW) to a global network (GNW), in particular the Internet (IN),
**b)** the service access occurs either across different networks from the local network (LNW) or directly into the global network (GNW, IN) to at least one Internet service (ISV), to at least one Cloud service (CSV), to at least one backend service (BESV) and/or to at least one blockchain service (BCSV),
**c)** a plurality of different cipher suites and/or key lengths, which are supported by communication protocols for the control communication and/or service access and are used or activated and usable for cryptographically protecting the control communication and/or the service access in the computer (CPT), these being in particular minimum key lengths which are required for crypto-algorithms, are stored, preferably in a list,
**characterized in that**
**d)** it is ascertained automatically and dynamically, in particular regularly or under event control, or manually, in particular on user request, by means of auto-configuration, whether the used or activated and usable cipher suites and/or key lengths are sufficiently strong for current cryptographic protection of the control communication and/or of the service access, **in that**
**d1)** in the course of an "Internet service (ISV)" access to at least one provider of Internet services, in each case a first communication connection, and/or in the course of a "blockchain service (BCSV)" access to at least one provider of blockchain services or to at least one blockchain node which implements a blockchain a second communication connection is set up, preferably in each case on a trial basis,
**d2)** "cipher suite"-related/-specific information which is available from the Internet service of the Internet provider, in particular cipher suites which support the Internet service of the Internet provider, is interrogated, in particular on the set-up first communication connection, in order to ascertain reference cipher suites which are appropriate for cryptographically protecting the control communication and/or the service access and are preferably stored in a reference list, and/or available blockchain information relating to the blockchain services of the blockchain provider or to the blockchains of the blockchain nodes which implement them, with data sets which are referred to as "proof of work" and have the purpose of performing complex computation tasks, is interrogated or ascertained, in particular on the set-up second communication connection, in order to ascertain reference key lengths which are appropriate for cryptographically protecting the control communication and/or the service access from the blockchain information by ascertaining blockchain difficulty parameters as key length estimation parameters, these reference key lengths preferably being stored in a reference list and being, in particular, reference minimum key lengths which are required for crypto-algorithms,
**d3)** the ascertained reference cipher suites and/or the reference key lengths which are ascertained by means of the key length estimation parameters are compared with the stored, used or activated and usable cipher suites and/or key lengths, preferably in the form of lists.

2. Method according to Claim 1, **characterized in that** a list, which is limited at least in terms of a "cipher suite", of activated cipher suites or the currently used or activated and usable cipher suite and/or key length are/is activated by means of manual configuration.

3. Method according to Claim 1 or 2, **characterized in that** if the comparison of a currently used or activated and usable cipher suite and/or key length of the stored cipher suites and/or key lengths with the ascertained reference cipher suites and/or the determined reference key lengths reveals that the currently used or activated and usable cipher suite and/or key length is not among the ascertained reference cipher suites and/or the determined reference key lengths, then
(i) a warning message which is addressed to the user of the computer (CPT) is generated and output,
(ii) the currently used or activated and usable cipher suite and/or key length is immediately disabled, and/or
(iii) the currently used or activated and usable cipher suite and/or key length is disabled after a grace period of the warning message which is output.

4. Method according to Claim 1, 2 or 3, **characterized in that** the ascertaining process, which is carried out automatically and dynamically, in particular regularly or under event control, occurs in a dedicated operating mode of the computer (CPT), e.g. in the waiting mode.

5. Method according to Claim 3, **characterized in that** the reference cipher suite and/or reference key length which has led to the disabling of the currently used or activated and usable cipher suite and/or key length are/is adopted automatically after a waiting time or after confirmation by a service technician.

6. Method according to one of Claims 1 to 5, **characterized in that**
the information which is interrogated by the Internet service providers for ascertaining the appropriate reference cipher suites is weighted.

7. Computer (CPT) for cryptographically protecting control communication in and/or service access to IT systems (ITS), in particular in connection with the diagnosis and configuration in an automation, control or supervisory system (AMS, STS, KTS), which computer is preferably configured as a field device, control device, IoT device, planning tool, servicing tool, testing tool or diagnosis tool,
**a)** having a network interface (NWSS) and a configuration memory (KSP), which are embodied in such a way that
**a1)** the control communication with further computers (CPT) takes place via the network interface (NWSS) within a wire-bound or wireless local network (LNW), in particular an Ethernet-based or WLAN-based network, or across different networks via a network node (NWK), which can be connected to the network interface (NWSS), of the local network (LNW), from the local network (LNW) to a global network (GNW), in particular the Internet (TCP/IP),
**a2)** the service access occurs via the network interface (NWSS) either across different networks, via the network node (NWK), which can be connected to the network interface (NWSS), of the local network (LNW), or directly into the global network (GNW, TCP/IP) to at least one Internet service (ISV), to at least one Cloud service (CSV), to at least one backend service (BESV) and/or to at least one blockchain service (BCSV),
**a3)** a plurality of different cipher suites and/or key lengths, which are supported by communication protocols for the control communication and/or the service access and are used or activated and usable for cryptographically protecting the control communication and/or the service access in the computer (CPT), these being, in particular, minimum key lengths which are required for crypto-algorithms, are stored in the configuration memory (KSP), preferably in a list,
**characterized by**
**b)** a non-volatile, readable memory (SP) in which processor-readable control program commands of a program module (PGM) which controls the cryptographic protection of the control communication and/or of the service access are stored, and a processor (PZ) which is connected to the memory (SP) and which executes the control program command to the program module (PGM) , is connected to the network interface (NWSS) and to the configuration memory (KSP), and is designed to control the cryptographic protection of the control communication and/or of the service access to the network interface (NWSS) and to the configuration memory (KSP) as a functional unit, in such a way that
**b1)** it is ascertained automatically and dynamically, in particular regularly or under event control, or manually, in particular on user request via an input interface (ESS) which is connected to the processor (PZ), by means of auto-configuration, whether the used or activated and usable cipher suites and/or key lengths are sufficiently strong for current cryptographic protection of the control communication and/or the service access, in that
**b2)** in the course of an "Internet service (ISV)" access to at least one provider of Internet services, in each case a first communication connection, and/or in the course of a "blockchain service (BCSV)" access to at least one provider of blockchain services a second communication connection is set up, preferably in each case on a trial basis,
**b3)** information which is available from the Internet service of the Internet provider is interrogated, in particular on the set-up first communication connection, in order to ascertain reference cipher suites which are appropriate for cryptographically protecting the control communication and/or the service access and which are preferably stored in a reference list, and/or available blockchain information relating to the blockchain services of the blockchain provider or to the blockchains of the blockchain nodes which implement them, with data sets which are referred to as "proof of work" and have the purpose of performing complex computation tasks, is interrogated or ascertained, in particular on the set-up second communication connection, in order to ascertain reference key lengths which are appropriate for cryptographically protecting the control communication and/or the service access from the blockchain information by ascertaining blockchain difficulty parameters as key length estimation parameters, these reference key lengths being preferably stored in a reference list and being, in particular, reference minimum key lengths which are required for crypto-algorithms,
**b4)** the ascertained reference cipher suites and/or the reference key lengths which are ascertained by means of the key length estimation parameters are compared with the used or activated and usable cipher suites and/or key lengths, preferably in the form of lists, stored in the configuration memory (KSP).

8. Computer (CPT) according to Claim 7, **characterized in that** it contains an input interface (ESS) which is connected to the processor (PZ) and forms, through the connection, a first functional unit which is configured in such a way that a list, which is limited at least in terms of "the cipher suite", of activated cipher suites or the currently used or activated and usable cipher suite and/or key length is activated by means of manual configuration.

9. Computer (CPT) according to Claim 7 or 8, **characterized in that**
it contains an output interface (ASS) which is connected to the processor (PZ) and forms, through this connection together with the program module (PGM) executed by the processor (PZ), and the configuration memory () a second functional unit which is configured in such a way that if the comparison of a currently used or activated and usable cipher suite and/or key length of the cipher suites and/or key lengths with the ascertained reference cipher suites and/or the determined reference key lengths stored in the configuration memory (KSP) reveals that the currently used or activated and usable cipher suite and/or key length is not among the ascertained reference cipher suites and/or the determined reference key lengths, then
(i) a warning message which is addressed to the user of the computer (CPT) is generated and output via the output interface (ASS),
(ii) the currently used cipher suite and/or key length is immediately disabled, and/or
(iii) the currently used cipher suite and/or key length is disabled after a grace period of the warning message which is output.

10. Computer (CPT) according to Claim 7, 8 or 9, **characterized in that**
the processor (PZ) and the program module (PGM) are embodied in such a way that the ascertaining process, which is carried out automatically and dynamically, in particular regularly or under event control, occurs in a dedicated operating mode of the computer (CPT), e.g. in the waiting mode.

11. Computer (CPT) according to Claim 9, **characterized in that** the processor (PZ) and the program module (PGM) are embodied in such a way that the reference cipher suite and/or reference key length which has led to the disabling of the currently used or activated and usable cipher suite and/or key length are/is adopted automatically after a waiting time or after confirmation by a service technician via the input interface (ESS).

12. Computer (CPT) according to one of Claims 7 to 11, **characterized in that**
the processor (PZ) and the program module (PGM) are embodied in such a way that the information which is interrogated by the Internet service providers for ascertaining the appropriate reference cipher suites is weighted.

## Revendications

1. Procédé de protection cryptographique de communication de commande dans et/ou d'accès de service à des systèmes IT (ITS), en particulier en rapport avec le diagnostic et la configuration dans un système d'automatisation, de commande ou de contrôle (AMS, STS, KTS), dans lequel :
a) la communication de commande a lieu entre des ordinateurs (CPT) réalisés de préférence en tant qu'appareil de terrain, appareil de commande, appareil IoT, outil de projet, de service, de test ou de diagnostic, dans un réseau local filaire ou sans fil (LNW), et plus particulièrement un réseau basé Ethernet ou WLAN, ou entre réseaux du réseau local (LNW) vers un réseau global (GNW), et plus particulièrement Internet (IN) ;
b) l'accès de service a lieu soit entre réseaux, du réseau local (LNW) ou directement vers le réseau global (GNW, IN), vers au moins un service Internet (ISV), vers au moins un service en nuage (CSV), vers au moins un service Backend (BESV) et/ou vers au moins un service de chaînes de blocs (BCSV) ;
c) plusieurs suites de chiffrage et/ou longueurs de clés, et plus particulièrement des longueurs de clés minimales requises pour des crypto-algorithmes, différentes, supportées par des protocoles de communication pour la communication de commande et/ou l'accès de service utilisées ou activées et utilisables pour la protection cryptographique de la communication de commande et/ou de l'accès de service dans l'ordinateur (CPT) sont sauvegardées, de préférence dans une liste,
**caractérisé en ce que**
d) il est déterminé par autoconfiguration, automatiquement et dynamiquement, et plus particulièrement régulièrement ou de manière commandée événementiellement, ou manuellement, et plus particulièrement sur demande d'un utilisateur, si les suites de chiffrage et/ou longueurs de clés utilisées ou activées et utilisables sont suffisamment fortes pour une protection cryptographique actuelle de la communication de commande et/ou de l'accès de service par :
d1) établissement, de préférence respectivement à titre d'essai, de respectivement une première liaison de communication dans le cadre d'un accès de « service Internet (ISV) » vers au moins un fournisseur de services Internet et/ou une deuxième liaison de communication dans le cadre d'un accès de « service de chaînes de blocs (BCSV) » vers au moins un fournisseur de services de chaînes de blocs ou vers au moins un nœud de chaînes de blocs réalisant une chaîne de blocs ;
d2) demande, plus particulièrement sur la première liaison de communication établie, par le service Internet du fournisseur Internet, d'informations, de suites de chiffrage disponibles relatives à / spécifiques à une « suite de chiffrage », et plus particulièrement supportant le service Internet du fournisseur Internet, pour déterminer des suites de chiffrage de référence convenant pour la protection cryptographique de la communication de commande et/ou de l'accès de service, sauvegardées de préférence dans une liste de référence, et/ou demande ou détermination, plus particulièrement sur la deuxième liaison de communication établie, concernant les services de chaînes de blocs du fournisseur de chaînes de blocs ou concernant les chaînes de blocs des nœuds de chaînes de blocs réalisant celles-ci, d'informations de chaînes de blocs disponibles avec des jeux de données désignés par « Proof of Work » pour la résolution de problèmes de calcul complexes pour déterminer des longueurs de clés de référence, et plus particulièrement des longueurs de clés minimales de référence requises pour des crypto-algorithmes, convenant pour la protection cryptographique de la communication de commande et/ou de l'accès de service à partir des informations de chaînes de blocs par la détermination de paramètres de difficulté de chaînes de blocs en tant que paramètres d'évaluation de longueurs de clés, de préférence sauvegardées dans une liste de référence ;
d3) comparaison, de préférence par liste, des suites de chiffrage de référence déterminées et/ou des longueurs de clés de référence déterminées par les paramètres d'évaluation de longueurs de clés avec les suites de chiffrage et/ou longueurs de clés sauvegardées, utilisées ou activées et utilisables.

2. Procédé selon la revendication 1, **caractérisé en ce qu'**une liste de suites de chiffrage activées, au moins restreinte en termes de « suite de chiffrage », ou la suite de chiffrage et/ou longueur de clé actuellement utilisée ou activée et utilisable est activée par configuration manuelle.

3. Procédé selon la revendication 1 ou 2, **caractérisé en ce que** s'il résulte de la comparaison entre une suite de chiffrage et/ou longueur de clé des suites de chiffrage et/ou longueurs de clés sauvegardées, actuellement utilisée ou activée et utilisable, et les suites de chiffrage de référence déterminées et/ou les longueurs de clés de référence déterminées que la suite de chiffrage et/ou longueur de clé actuellement utilisée ou activée et utilisable ne fait pas partie des suites de chiffrage de référence déterminées et/ou des longueurs de clés de référence déterminées, alors :
(i) un avertissement adressé à l'utilisateur de l'ordinateur (CPT) est généré et émis ;
(ii) la suite de chiffrage et/ou la longueur de clé actuellement utilisée ou activée et utilisable est bloquée sans délai et/ou
(iii) la suite de chiffrage et/ou la longueur de clé actuellement utilisée ou activée et utilisable est bloquée après une période d'attente de l'avertissement émis.

4. Procédé selon la revendication 1, 2 ou 3, **caractérisé en ce que** la détermination effectuée automatiquement et dynamiquement, et plus particulièrement régulièrement ou de manière commandée événementiellement, a lieu dans un mode opérationnel dédié de l'ordinateur (CPT), par exemple en mode de maintenance.

5. Procédé selon la revendication 3, **caractérisé en ce que** la suite de chiffrage de référence et/ou longueur de clé de référence ayant entraîné le blocage de la suite de chiffrage et/ou longueur de clé actuellement utilisée ou activée et utilisable est/sont reprise(s) automatiquement après un temps d'attente ou après confirmation par un technicien de service.

6. Procédé selon l'une des revendications 1 à 5, **caractérisé en ce que** les informations demandées par les fournisseurs de services Internet sont pondérées pour la détermination des suites de chiffrage de référence convenables.

7. Ordinateur (CPT) pour la protection cryptographique de communication de commande dans et/ou accès de service à des systèmes IT (ITS), et plus particulièrement en rapport avec le diagnostic et la configuration dans un système d'automatisation, de commande ou de contrôle (AMS, STS, KTS) qui est réalisé en tant qu'appareil de terrain, appareil de commande, appareil IoT, outil de projet, de service, de test ou de diagnostic,
a) comportant une interface réseau (NWSS) ainsi qu'une mémoire de configuration (KSP) qui sont réalisées de telle sorte que :
a1) via l'interface réseau (NWSS) a lieu la communication de commande avec d'autres ordinateurs (CPT) dans un réseau local filaire ou sans fil (LNW), et plus particulièrement un réseau basé Ethernet ou WLAN ou entre réseaux via un nœud de réseau (NWK) du réseau local (LNW) vers un réseau global (GNW), et plus particulièrement Internet (TCP/IP), nœud pouvant être relié à l'interface réseau (NWSS) ;
a2) via l'interface réseau (NWSS) a lieu l'accès de service soit entre réseaux, via le nœud de réseau (NWK) du réseau local (LNW) qui peut être relié à l'interface réseau (NWSS), soit directement vers le réseau global (GNW, TCP/IP) vers au moins un service Internet (ISV), vers au moins un service en nuage (CSV), vers au moins un service Backend (BESV) et/ou vers au moins un service de chaînes de blocs (BCSV),
a3) dans la mémoire de configuration (KSP) sont sauvegardées, de préférence dans une liste, plusieurs suites de chiffrage et/ou longueurs de clés, et plus particulièrement des longueurs de clés minimales requises pour des crypto-algorithmes, différentes supportées par des protocoles de communication pour la communication de commande et/ou l'accès de service et utilisées ou activées et utilisables pour la protection cryptographique de la communication de commande et/ou de l'accès de service dans l'ordinateur (CPT) ;
**caractérisé par**
b) une mémoire non volatile lisible (SP) dans laquelle sont sauvegardées des instructions de programme de commande lisibles par processeur d'un module de programme (PGM) commandant la protection cryptographique de la communication de commande et/ou de l'accès de service, et un processeur (PZ) relié à la mémoire (SP), lequel exécute les instructions de programme de commande du module de programme (PGM), est relié à l'interface réseau (NWSS) et à la mémoire de configuration (KSP) et est, aux fins de la commande de la protection cryptographique de la communication de commande et/ou de l'accès de service, réalisé en tant qu'unité fonctionnelle avec l'interface réseau (NWSS) et la mémoire de configuration (KSP) de telle sorte que :
b1) il est déterminé par autoconfiguration, automatiquement et dynamiquement, et plus particulièrement régulièrement ou de manière commandée événementiellement, ou manuellement, et plus particulièrement sur demande d'un utilisateur, via une interface d'entrée (ESS) qui est reliée au processeur (PZ), si les suites de chiffrage et/ou longueurs de clés utilisées ou activées et utilisables sont suffisamment fortes pour une protection cryptographique actuelle de la communication de commande et/ou de l'accès de service par :
b2) établissement, de préférence respectivement à titre d'essai, de respectivement une première liaison de communication dans le cadre d'un accès de « service Internet (ISV) » vers au moins un fournisseur de services Internet et/ou une deuxième liaison de communication dans le cadre d'un accès de « service de chaînes de blocs (BCSV) » vers au moins un fournisseur de services de chaînes de blocs ;
b3) demande, plus particulièrement sur la première liaison de communication établie, par le service Internet du fournisseur Internet, d'informations disponibles pour déterminer des suites de chiffrage de référence convenant pour la protection cryptographique de la communication de commande et/ou de l'accès de service, sauvegardées de préférence dans une liste de référence, et/ou demande ou détermination, plus particulièrement sur la deuxième liaison de communication établie, concernant les services de chaînes de blocs du fournisseur de chaînes de blocs ou concernant les chaînes de blocs des nœuds de chaînes de blocs réalisant celles-ci, d'informations de chaînes de blocs disponibles avec des jeux de données désignés par « Proof of Work » pour la résolution de problèmes de calcul complexes pour déterminer des longueurs de clés de référence, et plus particulièrement des longueurs de clés minimales de référence requises pour des crypto-algorithmes, convenant pour la protection cryptographique de la communication de commande et/ou de l'accès de service à partir des informations de chaînes de blocs par la détermination de paramètres de difficulté de chaînes de blocs en tant que paramètres d'évaluation de longueurs de clés, de préférence sauvegardées dans une liste de référence ;
b4) comparaison, de préférence par liste, des suites de chiffrage de référence déterminées et/ou des longueurs de clés de référence déterminées par les paramètres d'évaluation de longueurs de clés avec les suites de chiffrage et/ou longueurs de clés sauvegardées, utilisées ou activées et utilisables.

8. Ordinateur (CPT) selon la revendication 7, **caractérisé en ce qu'**est contenue une interface d'entrée (ESS) qui est reliée au processeur (PZ) et qui forme, du fait de la liaison, une première unité fonctionnelle qui est réalisée de telle sorte qu'une liste de suites de chiffrage activées, au moins restreinte en termes de « suite de chiffrage », ou la suite de chiffrage et/ou longueur de clé actuellement utilisée ou activée et utilisable est activée par configuration manuelle.

9. Ordinateur (CPT) selon la revendication 7 ou 8, **caractérisé en ce qu'**est contenue une interface de sortie (ASS) qui est reliée au processeur (PZ) et qui forme, du fait de cette liaison, ensemble avec le module de programme (PGM) exécuté par le processeur (PZ) et la mémoire de configuration (KSP), une deuxième unité fonctionnelle qui est réalisée de telle sorte que, s'il résulte de la comparaison entre une suite de chiffrage et/ou longueur de clé des suites de chiffrage et/ou longueurs de clés sauvegardées dans la mémoire de configuration (KSP), actuellement utilisée ou activée et utilisable, et les suites de chiffrage de référence déterminées et/ou les longueurs de clés de référence déterminées que la suite de chiffrage et/ou longueur de clé actuellement utilisée ou activée et utilisable ne fait pas partie des suites de chiffrage de référence déterminées et/ou des longueurs de clés de référence déterminées, alors :
(i) un avertissement adressé à l'utilisateur de l'ordinateur (CPT) est généré et émis via l'interface de sortie (ASS) ;
(ii) la suite de chiffrage et/ou la longueur de clé actuellement utilisée est bloquée sans délai et/ou
(iii) la suite de chiffrage et/ou la longueur de clé actuellement utilisée est bloquée après une période d'attente de l'avertissement émis.

10. Ordinateur (CPT) selon la revendication 7, 8 ou 9, **caractérisé en ce que** le processeur (PZ) et le module de programme (PGM) sont réalisés de telle sorte que la détermination effectuée automatiquement et dynamiquement, et plus particulièrement régulièrement ou de manière commandée événementiellement, a lieu dans un mode opérationnel dédié de l'ordinateur (CPT), par exemple en mode de maintenance.

11. Ordinateur (CPT) selon la revendication 9, **caractérisé en ce que** le processeur (PZ) et le module de programme (PGM) sont réalisés de telle sorte que la suite de chiffrage de référence et/ou longueur de clé de référence ayant entraîné le blocage de la suite de chiffrage et/ou longueur de clé actuellement utilisée ou activée et utilisable est/sont reprise(s) automatiquement après un temps d'attente ou après confirmation par un technicien de service via l'interface d'entrée (ESS).

12. Ordinateur (CPT) selon l'une des revendications 7 à 11, **caractérisé en ce que** le processeur (PZ) et le module de programme (PGM) sont réalisés de telle sorte que les informations demandées par les fournisseurs de services Internet sont pondérées pour la détermination des suites de chiffrage de référence convenables.
